# EUROPEAN PATENT SPECIFICATION

(11) **EP 3 511 267 B1**
(45) Date of publication and mention of the grant of the patent: **26.10.2022**
(21) Application number: 19150907.4
(22) Date of filing: 09.01.2019
(51) Int. Cl.: B65G 1/04

(54) **AUTOMATED WAREHOUSE SYSTEM FOR PANELS AND THE LIKE AND PLANT EQUIPPED WITH SUCH AN AUTOMATED WAREHOUSE SYSTEM**
AUTOMATISCHES LAGERSYSTEM FÜR PLATTEN
SYSTEME D'ENTREPOT AUTOMATIQUE POUR PANNEAUX

(30) Priority: 12.01.2018 IT 201800000789
(43) Date of publication of application: 17.07.2019
(73) Proprietor: SCM Group S.p.A., 47921 Rimini (RN) (IT)
(72) Inventor: RATTI, Federico, 47921 RIMINI (IT)
(74) Representative: Tiburzi, Andrea

(56) References cited:
- EP-A1- 0 225 858
- EP-A1- 0 322 539
- EP-A1- 0 540 931
- DE-A1- 3 400 916
- DE-U- 1 881 986
- JP-A- 2003 146 410
- US-A- 3 372 816

## Description

This invention relates to an automated warehouse system for panels and the like and plant equipped with such an automated warehouse system.

More in detail, the invention relates to a system designed and constructed in particular to allow the placing of wooden panels or similar elements, in such a way that they can be easily recognised, allowing at the same time the rapid extraction from the warehouse and the subsequent insertion in a production or processing line.

The description below relates to the storage and handling of wooden panels, but it is quite apparent how the same should not be considered limited to this specific use.

As is well known, there are currently warehouses in which the processing plants are housed, the panels to be processed generally being stacked one on each other and the stacks are arranged on the floor of the warehouse.

Moreover, each stack often comprises panels of different types, that is to say, of different quality or type of wood. For this reason, if a panel is required in the processing line which is not at the top of the stack, a movable gripping unit would need to move the upper panels, take the required panel and then place the other panels again in the containers.

This solution, as well as slowing down considerably the operations for extracting from and filling the warehouse with the requested panels, also has the limitation of occupying a considerable ground surface of the warehouse.

Moreover, a further technical problem of the above-mentioned horizontal warehouses is that of not allowing the operator to immediately check the presence or positioning of a particular type of panel.

It is obvious how this procedure is onerous in economic terms, also in consideration of the lengthy processing times.

The relevant prior art includes the patent application EP 0322539 A1.

In light of the above, the aim of the invention is therefore to provide an automated warehouse system which is able to overcome the limits of the conventional warehouses for panels.

Another aim of the invention is to provide an automated warehouse system which can easily be installed in warehouses in which processing plants are installed, exploiting the height of the warehouse to a maximum.

A further aim of the invention is to provide an automated warehouse system which allows, as necessary, the insertion of panels drawn from the warehouse directly in the processing plant.

Yet another aim of the invention is to allow an easy visibility of the panels for the operator and the relative extraction without having to move an excessive number of panels.

The specific object of this invention is therefore an automated warehouse system for panels, according to independent claim 1.

Again according to the invention, said system may comprise sensor means, for detecting the panels arranged on said shelves, to prevent, during the movement of a panel by means of said gripping and moving unit, collisions with said panels arranged on said shelves.

Further, according to the invention, said sensor means can be installed on said at least one gripping robot.

Advantageously according to the invention, said sensor means may be of the optical type, such as a video camera, infrared sensors and the like.

Again according to the invention, said gripping robot may be configured to raise or lower said at least one panel in the direction of said third axis and to move it in the direction of said first axis, passing it between said shelves or between the top of the stacks of other panels and said shelves.

Again according to the invention, said supporting frame comprises said main guide means.

Advantageously, according to the invention, said supporting frame may comprise a plurality of vertical supports and a plurality of projecting supports oriented along said second axis and fixed, or removably fixed, to said vertical supports, wherein one or more of said projecting supports form said shelves, on which said panels are stacked on.

Further, according to the invention, said supporting frame can be fixable to a wall.

Again, according to the invention, said main guide means can comprise an upper guide, intended to be arranged on said wall, and a lower guide, intended to be placed on the ground.

Again according to the invention, said supporting frame may have at least one loading and unloading opening, delimited at the top and at the bottom respectively by said upper guide and by said lower guide, in correspondence of which said gripping and moving unit loads the panels to be placed on said shelves or unloads the panels taken from said shelves.

Further, according to the invention, said gripping and moving unit may comprise a supporting frame, formed by a vertical portion, comprising two uprights constituting said further guide means, and a horizontal portion, comprising two cross-members, which said gripping robot is slidingly coupled to.

Again, according to the invention, said horizontal portion of said supporting frame can be slidingly coupled to said upper guide by the carriages, while said vertical portion of said supporting frame can be slidingly coupled to said lower guide by the carriages.

Again, according to the invention, said gripping robot can be slidably coupled by means of a slide to said uprights of said vertical portion of said supporting frame.

Advantageously according to the invention, said gripping robot may comprise a gripper or gripping hand equipped with vacuum suckers for taking panels and their following handling.

Further, according to the invention, said clamp or gripping hand can be adjustable according to the size of the panel to be taken or released.

The specific object of this invention is therefore a plant for processing panels comprising a work surface, means for processing said panels positioned at said work surface, and means for conveying said panels, such as a roller conveyor or a conveyor belt, for transporting said panels on said work surface, characterized in that it comprises an automated warehouse system according to any one of the preceding claims, wherein said panels to be processed are arranged by means of said processing means.

Again according to the invention, at least one of said loading and unloading openings can be arranged in correspondence of said means for conveying said panels.

The invention is now described, by way of example and without limiting the scope of the invention, with reference to the accompanying drawings which illustrate preferred embodiments of it, in which:
Figure 1 shows a first perspective view of an automated warehouse system according to the invention;
Figure 2 shows a second perspective view of the automated warehouse system according to Figure 1;
Figure 3 shows a front view of the automated warehouse system according to Figure 1;
Figure 4 shows a top view of the automated warehouse system according to Figure 1;
Figure 5 shows a view along section A-A of the automated warehouse system according to Figure 1; and
Figure 6 shows the automated warehouse system according to the invention in a step for moving a panel;

The similar parts will be indicated in the various drawings with the same numerical references.

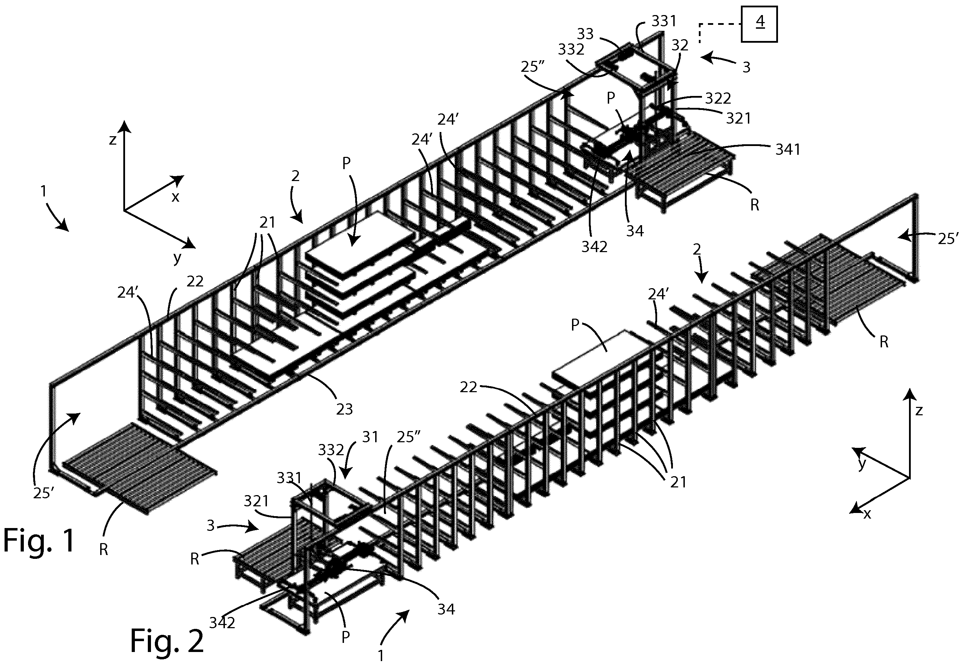

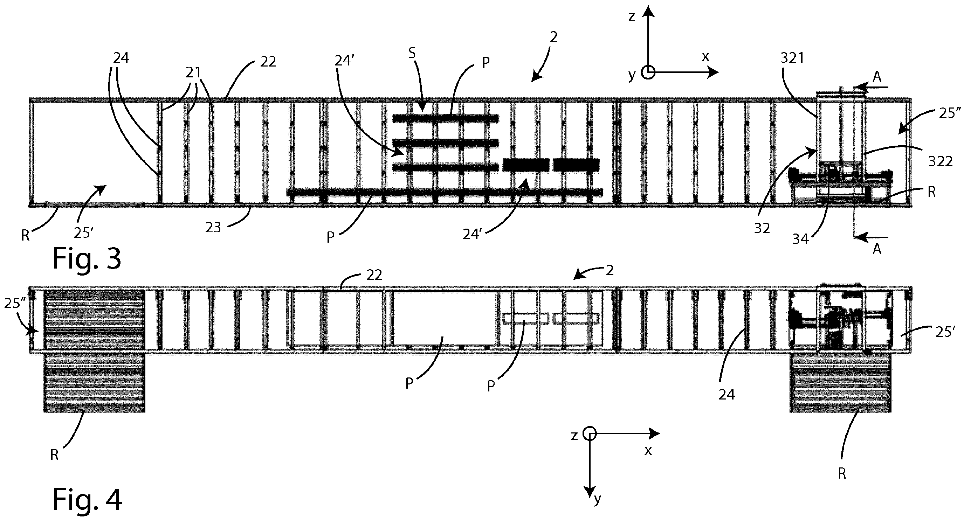

Figures 1-5 show an automated warehouse system 1 according to the invention.

The automated warehouse system 1 basically comprises a supporting frame 2, and a gripping and moving unit 3, for moving panels P (or any element having a plane extension, such as slabs, plates and the like) stacked and positioned in the supporting frame 2 and for the extraction of the panels, and a control unit 4.

More in detail, the supporting frame 2 is fixable, for example, to the wall of a warehouse in which is installed a plant for processing panels P made of wood stored in the warehouse 1.

For sake of simplicity, reference is made to a set of Cartesian axes X, Y, Z, in which a first axis X is positioned horizontally, parallel to the ground, a second axis Y is perpendicular to said first axis X and also parallel to the ground, and a third axis Z is perpendicular to said first X and second Y axis.

The supporting frame 2 comprises a plurality vertical supports 21, orientated according to said third axis Z, positioned parallel to each other, designed to be positioned adjacent to the above-mentioned vertical wall, which is parallel to the plane formed by said first X and third Z axis.

The supporting frame 2 also comprises main guide means, and in particular an upper guide 22 and a lower guide 23, both positioned horizontally, the purpose of which is described in more detail below. More specifically, said upper guide 22 and said lower guide 23 are parallel to each other and orientated along said first axis X.

Said upper guide 22 is designed to be positioned in the embodiment in question always on said vertical wall, whilst said lower guide 23 is designed to be positioned on a floor.

According to an alternative embodiment, said main guide means can also not be part of said supporting frame 2, but be outside or structurally independent of it. More specifically, one or both of said upper guide 22 and lower guide 23 can be part of or independent of the supporting frame 2.

The supporting frame 2 also comprises a plurality of projecting supports 24 which are fixed, or removably fixed, to said vertical supports 21, in order to form together shelving or shelves 24' on which can be rested the panels P. Said projecting supports 24 are oriented along said second axis Y.

More specifically, said projecting supports 24 can be fixed to the vertical supports 21 according to various configurations, so as to support stacks S of panels P of different sizes and different types.

On both sides, that is to say, at the ends, supporting frame 2 also has loading and unloading opening 25', 25", delimited at the top and at the bottom respectively by said upper guide 22 and by said lower guide 23. If necessary, the supporting frame 2 can also have one or more loading and unloading openings arranged in an intermediate position, that is to say, not at the ends.

The purpose of said loading and unloading openings 25' and 25" will be described in more detail below.

The gripping and moving unit 3 comprises a supporting frame 31, formed by a vertical portion 32, comprising two parallel uprights 321 and 322 and a horizontal portion 33, comprising two cross-members 331 and 332.

The supporting frame 31 is slidingly coupled to said upper guide 22 and said lower guide 23 of said supporting frame 2.

More in detail, said horizontal portion 32 of said supporting frame 31 is slidingly coupled to said upper guide 22 of said supporting frame 2 by the suitably motor-driven carriages 323, while said vertical portion 33 of said supporting frame 31 is slidingly coupled to said lower guide 23 of said supporting frame 2 by the by the motor-driven carriages 333.

The gripping and moving unit 3 also comprises a gripping robot 34, slidably coupled by means of a slide 341 to said parallel uprights 321 and 322 of said vertical portion 32, which thereby act as further guide means.

The gripping robot 34 comprises a gripper or gripping hand 342 equipped in the embodiment with vacuum suckers, for taking panels P and their following handling.

Thanks to the configuration described, the gripping robot 34 is movable both vertically (in the direction of the third axis Z), thanks to the slide 341, and horizontally (in the direction of the first axis X), thanks to the sliding of the supporting frame 31 along said upper guide 22 and said lower guide 23 of the supporting frame 2.

The automated warehouse system 1 also comprises sensor means (not shown in the drawings), comprising one of more sensors, to prevent collisions with panels which already occupy the shelves during movement of the panel P by means of the gripping robot 34.

Said sensor means are of the optical type, such as a video camera, infrared sensors and the like. Moreover, in the case in question, they can be installed on said gripping robot 34, thereby moving as one with it.

The automated warehouse system 1 also comprises a control unit 4, operatively connected to the gripping and moving unit 3, for the relative control, so as to allow the automatic movement of the panels. Naturally, said control unit 4 can be integrated in a more extensive logic system for the IT control of a plant of which said automated warehouse system 1 can be part.

The operation of the automated warehouse system 1 described above is as follows.

As mentioned, the panels P are normally arranged in stacks S resting on shelves made from two or more projecting supports 24, as shown in Figures 1, 3 and 5.

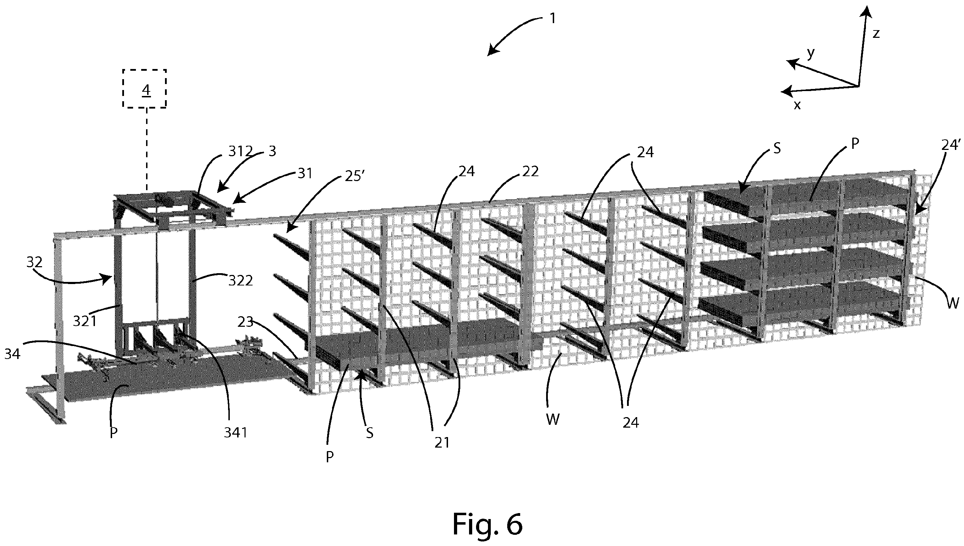

Moreover, with reference to Figure 6, the automated warehouse system 1 is installed on a wall W.

When it is necessary to take a panel P from one of the stacks S, an operator can, by means of the control unit 4, control the gripping and moving unit 3 in such a way that, sliding along said upper guide 22 and said lower guide 23, it can move the gripping robot 34 to a stack S in which there is the panel P to be taken.

By using the sensor means the gripping robot 34 prevents the risk of collisions with panels already placed on the shelves or with other stacks S.

More specifically, when the gripping and moving unit 3 is moved along the direction of the axis X, the gripping robot 34 passes through the shelves 24' made by means of the projecting supports 24 (so parallel to the plane identified by said first axis X and said second axis Y), that is, between the top of the stacks S of panels P and the shelves 24', made, as said, by means of the projecting supports 24.

Consequently, the stacks S must have a height such as to leave a space between the top of the same stack S and the projecting supports 24 of the upper shelves which is sufficient to allow the passage of the gripping robot 34.

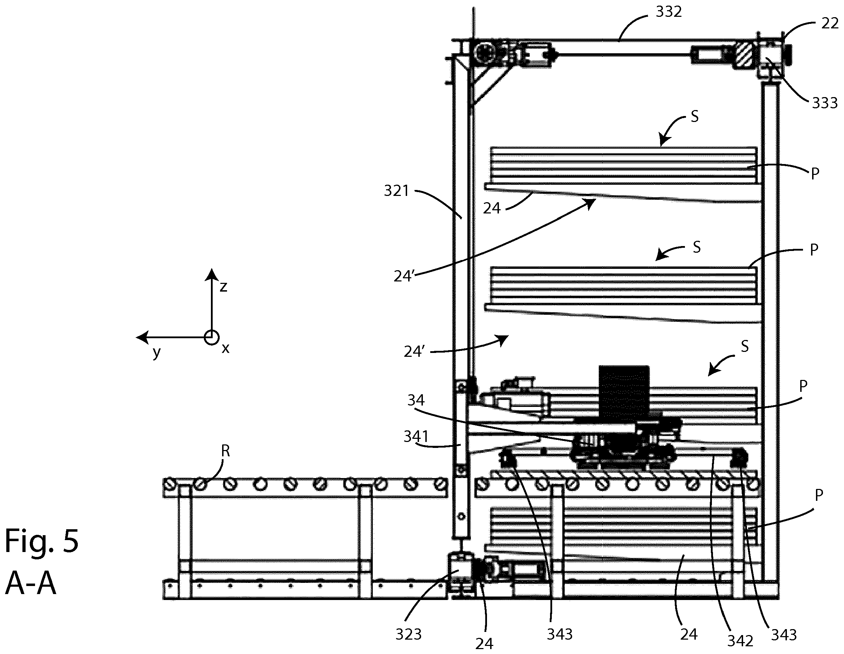

Once the gripping robot 34 is positioned above the panel P to be taken, said gripping robot 34 is moved vertically along the arrow A to position the vacuum suckers 343 resting on the upper surface of the panel P to be taken. Said vacuum suckers 343, once they are resting on the surface of the panel P (see, for example, figure 5) take the panel.

Subsequently, the gripping and moving unit 3 moves again along the arrow B, to the right or to the left, until reaching one of the loading and unloading openings 25' and 25".

At one or both of said loading and unloading openings 25' and 25" there can be a roller unit R (see Figures 1-5) or a conveyor belt or similar means, on which the gripping robot 34 places the panel P taken from the warehouse, i.e. from the shelves made using the projecting supports 24. In this way, the panels P taken and unloaded on the above-mentioned transport means can be suitably processed by a processing plant, of which the automated warehouse system 1 according to the invention may also be part.

Naturally, if the panel P to be taken were not positioned on the top of the stack S, the gripping robot 34 would have to repeat various operations for picking up the panels positioned on the top of the stack S until reaching the desired panel P, then pick it up and unload it at one of said loading and unloading openings 25' or 25".

In accordance with a further embodiment of the automated warehouse system 1 according to the invention, the projecting supports 24 can be slidably coupled to said vertical supports 21, and subsequently fixed in position with fixing means (not shown in the drawings), so as to allow a rapid making of the shelves according to the storage requirements.

The spacing and the number of loading shelves, made using the projecting supports 24, can be, as mentioned, modified.

With regard to the horizontal spacing of the vertical supports 21, the minimum length of the panel must be considered, creating an adequate spacing. This requires resting the panels of maximum length on a greater number of projecting supports 24, so as to also support a greater weight.

Naturally, the smaller the section of said projecting supports 24 the greater will be the vertical space for staking the panels P.

In other words, it is generally necessary to make a number of shelves by means of said projecting supports 24 taking into account the height of the stack S of panels P to be achieved, the overall sizes and the weight reached for each stack S.

It is necessary to consider that the incoming height of the panels P and the outgoing height can imply particular measures for the distribution of the shelves. In fact, the pickup and placing point from and on each stack S must be at the maximum at the highest pickup point from the lowest shelf.

The installation of the upper guide 22 of the automated warehouse system 1 to the wall W or to the columns of the warehouse means that the system 1 must be adapted each time to the structural requirements.

Moreover, projecting supports 24 of different types can be installed.

In addition, in order to load the panels P with a forklift truck the supporting frame 2 must face and be fixed to the wall W.

The automated warehouse system 1 can also operate in the opposite manner to that described above for loading the panels P on the shelves 24', instead of picking up from the shelves. Said panels P can be, for example, placed by means of a forklift truck or the like at said loading and unloading openings 25' and 25".

An advantage of the automated warehouse system according to the invention is that of allowing an easy loading of the panels on the shelves, by means of, for example, a forklift truck, and a the same time a rapid selection and extraction of a selected panel from the warehouse for its use.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. An automated warehouse system (1) for panels (P), comprising
a supporting frame (2), having one or more shelves (24'), on which said panels (P) can be arranged in stacks (S), wherein said shelves (24') are arranged, with respect to a set of Cartesian axes (X, Y, Z), along a first axis (X), parallel to the ground, and along a second axis (Y), perpendicular to said first axis (X) and also parallel to the ground, and
a gripping and moving unit (3) configured to take or release a panel (P) from or onto said shelves (24'), and
main guide means (22, 23), arranged along or parallel to said first axis (X),
wherein said gripping and moving unit (3) comprises a supporting frame (31), slidingly coupled with said main guide means (22, 23) of said supporting frame (2), further guide means (321, 322) and at least one gripping robot (34), movable on said further guide means (321, 322) of said supporting frame (31),
wherein said further guide means (321, 322) are oriented parallel to a third axis (Z) of said set of Cartesian axes (X, Y, Z), perpendicular to said first (X) and second (Y) axis, and
wherein said main guide means (22, 23) and said further guide means (321, 322) are oriented so as to allow said gripping robot (34) to take or release at least one panel (P) from or onto said shelves (24'),
said system (1) being **characterized in that**
said supporting frame (2) has two loading and unloading openings (25', 25") arranged at the ends and/or at least one loading and unloading opening (25', 25") arranged in an intermediate position

2. System (1) according to the preceding claim, **characterized in that** it comprises sensor means, for detecting the panels (P) arranged on said shelves (24'), to prevent, during the movement of a panel (P) by means of said gripping and moving unit (3), collisions with said panels (P) arranged on said shelves (24').

3. System (1) according to the preceding claim, **characterized in that** said sensor means are installed on said at least one gripping robot (34).

4. System (1) according to any one of claims 2 or 3, **characterized in that** said sensor means are of the optical type, such as a video camera, infrared sensors and the like.

5. System (1) according to any one of the preceding claims, **characterized in that** said gripping robot (34) is configured to raise or lower said at least one panel (P) in the direction of said third axis (Z) and to move it in the direction of said first axis (X), passing it between said shelves (24') or between the top of the stacks (S) of other panels (P) and said shelves (24').

6. System (1) according to any one of the preceding claims, **characterized in that** said supporting frame (2) comprises said main guide means (22, 23).

7. System (1) according to any one of the preceding claims, **characterized in that** said supporting frame (2) comprises a plurality of vertical supports (21) and a plurality of projecting supports (24) oriented along said second axis (Y) and fixed, or removably fixed, to said vertical supports (21), wherein one or more of said projecting supports (24) form said shelves (24'), on which said panels (P) are stacked on.

8. System (1) according to any one of the preceding claims, **characterized in that** said supporting frame (2) is fixable to a wall (W).

9. System (1) according to any one of the preceding claims, **characterized in that** said main guide means (22, 23) comprise an upper guide (22), intended to be arranged on said wall (W), and a lower guide (23), intended to be placed on the ground.

10. System (1) according to the preceding claim, **characterized in that** said supporting frame (2) has at least one loading and unloading opening (25', 25"), delimited at the top and at the bottom respectively by said upper guide (22) and by said lower guide (23), in correspondence of which said gripping and moving unit (3) loads the panels (P) to be placed on said shelves (24') or unloads the panels (P) taken from said shelves (24').

11. System (1) according to any one of the preceding claims, **characterized in that** said gripping and moving unit (3) comprises a supporting frame (31), formed by a vertical portion (32), comprising two uprights (321, 322) constituting said further guide means (321, 322), and a horizontal portion (33), comprising two cross-members (331, 332), which said gripping robot (34) is slidingly coupled to.

12. System (1) according to the preceding claim, when dependent on any one of claims 9-11, **characterized in that** said horizontal portion (32) of said supporting frame (31) is slidingly coupled to said upper guide (22) by the carriages (323), while said vertical portion (33) of said supporting frame (31) is slidingly coupled to said lower guide (23) by the carriages (333).

13. System (1) according to claim 11 or 12, **characterized in that** said gripping robot (34) is slidably coupled by means of a slide (341) to said uprights (321, 322) of said vertical portion (32) of said supporting frame (31).

14. System (1) according to any one of the preceding claims, **characterized in that** said gripping robot (34) comprises a gripper or gripping hand (342) equipped with vacuum suckers (343) for taking panels (P) and their following handling.

15. System (1) according to the preceding claim, **characterized in that** said clamp or gripping hand (342) is adjustable according to the size of the panel (P) to be taken or released.

16. A plant for processing panels (P) comprising
a work surface,
means for processing said panels (P) arranged in correspondence of said work surface, and
means for conveying said panels (P), such as a roller conveyor (R) or a conveyor belt, for transporting said panels (P) on said work surface,
**characterized in that** it comprises an automated warehouse system (1) according to any one of the preceding claims, wherein said panels (P) to be processed are arranged by means of said processing means.

17. Plant according to the preceding claim, when dependent on any one of claims 1 or 10, **characterized in that** at least one of said loading and unloading openings (25', 25") is arranged in correspondence of said means for conveying said panels (P).

## Patentansprüche

1. Automatisches Lagersystem (1) für Platten (P), umfassend einen Tragrahmen (2), der ein oder mehrere Regalbretter (24') aufweist, auf denen die Platten (P) in Stapeln (S) angeordnet werden können, wobei die Regalbretter (24') in Bezug auf einen Satz kartesischer Achsen (X, Y, Z) entlang einer ersten Achse (X) parallel zum Boden und entlang einer zweiten Achse (Y) senkrecht zu der ersten Achse (X) und auch parallel zum Boden angeordnet sind, und
eine Greif- und Bewegungseinheit (3), die konfiguriert ist, um eine Platte (P) von den Regalbrettern (24') aufzunehmen oder darauf abzulegen, und Hauptführungseinrichtungen (22, 23), die entlang oder parallel zu der ersten Achse (X) angeordnet sind,
wobei die Greif- und Bewegungseinheit (3) einen Tragrahmen (31), der gleitend mit den Hauptführungseinrichtungen (22, 23) des Tragrahmens (2) gekoppelt ist, weitere Führungseinrichtungen (321, 322) und mindestens einen Greifroboter (34), der auf den weiteren Führungseinrichtungen (321, 322) des Tragrahmens (31) beweglich ist, umfasst,
wobei die weiteren Führungseinrichtungen (321, 322) parallel zu einer dritten Achse (Z) des Satzes kartesischer Achsen (X, Y, Z), senkrecht zu der ersten (X) und der zweiten (Y) Achse, ausgerichtet sind, und wobei die Hauptführungseinrichtungen (22, 23) und die weiteren Führungseinrichtungen (321, 322) ausgerichtet sind, um es dem Greifroboter (34) zu ermöglichen, mindestens eine Platte (P) von den Regalbrettern (24') aufzunehmen oder darauf abzulegen,
wobei das System (1) **dadurch gekennzeichnet ist, dass** der Tragrahmen (2) zwei an den Enden angeordnete Be- und Entladeöffnungen (25', 25") und/oder mindestens eine in einer Zwischenposition angeordnete Be- und Entladeöffnung (25', 25") aufweist.

2. System (1) nach dem vorherigen Anspruch, **dadurch gekennzeichnet, dass** es Sensoreinrichtungen zum Erfassen der auf den Regalbrettern (24') angeordneten Platten (P) umfasst, um während der Bewegung einer Platte (P) mittels der Greif- und Bewegungseinheit (3) Kollisionen mit den auf den Regalbrettern (24') angeordneten Platten (P) zu verhindern.

3. System (1) nach dem vorherigen Anspruch, **dadurch gekennzeichnet, dass** die Sensoreinrichtungen an dem mindestens einen Greifroboter (34) installiert sind.

4. System (1) nach einem der Ansprüche 2 oder 3, **dadurch gekennzeichnet, dass** die Sensoreinrichtungen vom optischen Typ sind, wie beispielsweise eine Videokamera, Infrarotsensoren und dergleichen.

5. System (1) nach einem der vorherigen Ansprüche, **dadurch gekennzeichnet, dass** der Greifroboter (34) konfiguriert ist, um die mindestens eine Platte (P) in Richtung der dritten Achse (Z) anzuheben oder abzusenken und sie in Richtung der ersten Achse (X) zu bewegen, wobei er sie zwischen den Regalbrettern (24') oder zwischen der Oberseite der Stapel (S) der anderen Platten (P) und den Regalbrettern (24') hindurchführt.

6. System (1) nach einem der vorherigen Ansprüche, **dadurch gekennzeichnet, dass** der Tragrahmen (2) die Hauptführungseinrichtungen (22, 23) umfasst.

7. System (1) nach einem der vorherigen Ansprüche, **dadurch gekennzeichnet, dass** der Tragrahmen (2) eine Vielzahl von vertikalen Trägern (21) und eine Vielzahl von hervorstehenden Trägern (24), die entlang der zweiten Achse (Y) ausgerichtet und an den vertikalen Trägern (21) befestigt oder abnehmbar befestigt sind, umfasst, wobei eine oder mehrere der vorstehenden Trägern (24) die Regalbretter (24') bilden, auf denen die Platten (P) gestapelt werden.

8. System (1) nach einem der vorherigen Ansprüche, **dadurch gekennzeichnet, dass** der Tragrahmen (2) an einer Wand (W) befestigt werden kann.

9. System (1) nach einem der vorherigen Ansprüche, **dadurch gekennzeichnet, dass** die Hauptführungseinrichtungen (22, 23) eine obere Führung (22), die dazu bestimmt ist, an der Wand (W) angeordnet zu werden, und eine untere Führung (23), die dazu bestimmt ist, auf den Boden platziert zu werden, umfassen.

10. System (1) nach dem vorherigen Anspruch, **dadurch gekennzeichnet, dass** der Tragrahmen (2) mindestens eine Lade- und Entladeöffnung (25', 25") aufweist, die oben bzw. unten durch die obere Führung (22) und die untere Führung (23) begrenzt ist, in deren Entsprechung die Greif- und Bewegungseinheit (3) die Platten (P) lädt, die auf den Regalbrettern (24') platziert werde sollen, oder die Platten (P) entlädt, die von den Regalbrettern (24') entnommen werden sollen.

11. System (1) nach einem der vorherigen Ansprüche, **dadurch gekennzeichnet, dass** die Greif- und Bewegungseinheit (3) einen Tragrahmen (31) umfasst, der aus einem vertikalen Abschnitt (32) umfassend zwei Ständer (321, 322), die die weiteren Führungseinrichtungen (321, 322) bilden, und einem horizontalen Abschnitt (33) umfassend zwei Querträger (331, 332), an die der Greifroboter (34) gleitend gekoppelt ist, gebildet ist.

12. System (1) nach dem vorherigen Anspruch, wenn abhängig von einem der Ansprüche 9-11, **dadurch gekennzeichnet, dass** der horizontale Abschnitt (32) des Tragrahmens (31) durch den Schlitten (323) gleitend mit der oberen Führung (22) gekoppelt ist, während der vertikale Abschnitt (33) des Tragrahmens (31) durch den Schlitten (333) gleitend mit der unteren Führung (23) gekoppelt ist.

13. System (1) nach Anspruch 11 oder 12, **dadurch gekennzeichnet, dass** der Greifroboter (34) mittels einer Gleitschiene (341) verschiebbar mit den Ständern (321, 322) des vertikalen Abschnitts (32) des Tragrahmens (31) gekoppelt ist.

14. System (1) nach einem der vorherigen Ansprüche, **dadurch gekennzeichnet, dass** der Greifroboter (34) einen Greifer oder eine Greifhand (342) umfasst, der/die mit Vakuumsaugern (343) zum Aufnehmen von Platten (P) und deren anschließender Handhabung ausgestattet ist.

15. System (1) nach dem vorherigen Anspruch, **dadurch gekennzeichnet, dass** die Klemme oder die Greifhand (342) abhängig von der Größe der zu entnehmenden oder abzulegenden Platte (P) einstellbar ist.

16. Anlage zur Verarbeitung von Platten (P), umfassend eine Arbeitsfläche,
Einrichtungen zum Verarbeiten der Platten (P), die in Übereinstimmung mit der Arbeitsfläche angeordnet sind, und
Einrichtungen zum Transportieren der Platten (P), wie beispielsweise eine Rollenbahn (R) oder ein Förderband, um die Platten (P) auf der Arbeitsfläche zu transportieren,
**dadurch gekennzeichnet, dass** sie ein automatisches Lagersystem (1) nach einem der vorherigen Ansprüche umfasst, wobei die zu verarbeitenden Platten (P) mittels der Verarbeitungseinrichtungen angeordnet sind.

17. Anlage nach dem vorherigen Anspruch, wenn abhängig von einem der Ansprüche 1 oder 10, **dadurch gekennzeichnet, dass** mindestens eine von der Lade- und Entladeöffnung (25', 25") in Übereinstimmung mit den Einrichtungen zum Transportieren der Platten (P) angeordnet ist.

## Revendications

1. Système d'entrepôt automatisé (1) pour des panneaux (P), comprenant un cadre de support (2), présentant une ou plusieurs étagères (24'), sur lequel lesdits panneaux (P) peuvent être agencés en piles (S), dans lequel lesdites étagères (24') sont agencées, par rapport à un ensemble d'axes cartésiens (X, Y, Z), le long d'un premier axe (X), parallèle au sol, et le long d'un deuxième axe (Y), perpendiculaire audit premier axe (X) et également parallèle au sol, et
une unité de préhension et de déplacement (3) configurée pour prendre ou libérer un panneau (P) depuis ou sur lesdites étagères (24'), et
des moyens de guidage principaux (22, 23), agencés le long ou parallèlement audit premier axe (X),
dans lequel ladite unité de préhension et de déplacement (3) comprend un cadre de support (31), couplé de manière coulissante avec lesdits moyens de guidage principaux (22, 23) dudit cadre de support (2), des moyens de guidage supplémentaires (321, 322) et au moins un robot de préhension (34), pouvant être déplacé sur lesdits moyens de guidage supplémentaires (321, 322) dudit cadre de support (31),
dans lequel lesdits moyens de guidage supplémentaires (321, 322) sont orientés parallèlement à un troisième axe (Z) dudit ensemble d'axes cartésiens (X, Y, Z), perpendiculaires auxdits premier (X) et deuxième (Y) axes, et
dans lequel lesdits moyens de guidage principaux (22, 23) et lesdits moyens de guidage supplémentaires (321, 322) sont orientés de manière à permettre audit robot de préhension (34) de prendre ou de libérer au moins un panneau (P) depuis ou sur lesdites étagères (24'), ledit système (1) étant **caractérisé en ce que**
ledit cadre de support (2) présente deux ouvertures de chargement et de déchargement (25', 25") agencées aux extrémités et/ou au moins à une ouverture de chargement et de déchargement (25', 25") agencée dans une position intermédiaire.

2. Système (1) selon la revendication précédente, **caractérisé en ce qu'**il comprend des moyens de capteur, pour détecter les panneaux (P) agencés sur lesdites étagères (24'), pour empêcher, pendant le déplacement d'un panneau (P) au moyen de ladite unité de préhension et de déplacement (3), des collisions avec lesdits panneaux (P) agencés sur lesdites étagères (24').

3. Système (1) selon la revendication précédente, **caractérisé en ce que** lesdits moyens de capteur sont installés sur ledit au moins un robot de préhension (34).

4. Système (1) selon l'une quelconque des revendications 2 ou 3, **caractérisé en ce que** lesdits moyens de capteur sont du type optique, tels qu'une caméra vidéo, des capteurs infrarouges et analogues.

5. Système (1) selon l'une quelconque des revendications précédentes, **caractérisé en ce que** ledit robot de préhension (34) est configuré pour monter ou descendre ledit au moins un panneau (P) dans la direction dudit troisième axe (Z) et le déplacer dans la direction dudit premier axe (X), en le faisant passer entre lesdites étagères (24') ou entre le dessus des piles (S) d'autres panneaux (P) et lesdites étagères (24').

6. Système (1) selon l'une quelconque des revendications précédentes, **caractérisé en ce que** ledit cadre de support (2) comprend lesdits moyens de guidage principaux (22, 23).

7. Système (1) selon l'une quelconque des revendications précédentes, **caractérisé en ce que** ledit cadre de support (2) comprend une pluralité de supports verticaux (21) et une pluralité de supports saillants (24) orientés le long dudit deuxième axe (Y) et fixes, ou fixés de manière amovible, auxdits supports verticaux (21), dans lequel un ou plusieurs desdits supports saillants (24) forment lesdites étagères (24'), sur lesquelles lesdits panneaux (P) sont empilés.

8. Système (1) selon l'une quelconque des revendications précédentes, **caractérisé en ce que** ledit cadre de support (2) peut être fixé à un mur (W).

9. Système (1) selon l'une quelconque des revendications précédentes, **caractérisé en ce que** lesdits moyens de guidage principaux (22, 23) comprennent un guide supérieur (22), destiné à être agencé sur ledit mur (W), et un guide inférieur (23), destiné à être placé sur le sol.

10. Système (1) selon la revendication précédente, **caractérisé en ce que** ledit cadre de support (2) présente au moins une ouverture de chargement et de déchargement (25', 25"), délimitée en haut et en bas respectivement par ledit guide supérieur (22) et par ledit guide inférieur (23), en correspondance duquel ladite unité de préhension et de déplacement (3) charge les panneaux (P) à placer sur lesdites étagères (24') ou décharge les panneaux (P) prélevés desdites étagères (24').

11. Système (1) selon l'une quelconque des revendications précédentes, **caractérisé en ce que** ladite unité de préhension et de déplacement (3) comprend un cadre de support (31), formé par une partie verticale (32), comprenant deux montants (321,322) constituant lesdits moyens de guidage supplémentaires (321, 322), et une partie horizontale (33), comprenant deux traverses (331, 332), auxquelles ledit robot de préhension (34) est couplé de manière coulissante.

12. Système (1) selon la revendication précédente, lorsqu'elle dépend de l'une quelconque des revendications 9-11, **caractérisé en ce que** ladite partie horizontale (32) dudit cadre de support (31) est couplée de manière coulissante audit guide supérieur (22) par les chariots (323), tandis que ladite partie verticale (33) dudit cadre de support (31) est couplée de manière coulissante audit guide inférieur (23) par les chariots (333).

13. Système (1) selon la revendication 11 ou 12, **caractérisé en ce que** ledit robot de préhension (34) est couplé de manière coulissante au moyen d'une glissière (341) auxdits montants (321, 322) de ladite partie verticale (32) dudit cadre de support (31).

14. Système (1) selon l'une quelconque des revendications précédentes, **caractérisé en ce que** ledit robot de préhension (34) comprend une griffe ou main de préhension (342) équipée de ventouses à vide (343) pour la prise de panneaux (P) et leur manipulation ultérieure.

15. Système (1) selon la revendication précédente, **caractérisé en ce que** ladite pince ou main de préhension (342) est ajustable en fonction de la taille du panneau (P) à prendre ou à libérer.

16. Installation de traitement de panneaux (P) comprenant
une surface de travail,
des moyens pour traiter lesdits panneaux (P) agencés en correspondance de ladite surface de travail, et
des moyens de convoyage desdits panneaux (P), tels qu'un convoyeur à rouleaux (R) ou un convoyeur à courroie, pour transporter lesdits panneaux (P) sur ladite surface de travail,
**caractérisée en ce qu'**elle comprend un système d'entrepôt automatisé (1) selon l'une quelconque des revendications précédentes, dans laquelle lesdits panneaux (P) à traiter sont agencés au moyen desdits moyens de traitement.

17. Installation selon la revendication précédente, lorsqu'elle dépend de l'une quelconque des revendications 1 ou 10, **caractérisée en ce qu'**au moins une desdites ouvertures de chargement et de déchargement (25', 25") est agencée en correspondance desdits moyens pour convoyer lesdits panneaux (P).
